# EUROPEAN PATENT APPLICATION

(11) **EP 4 773 000 A1**
(43) Date of publication of application: **08.07.2026**
(21) Application number: 24953648.3
(22) Date of filing: 26.12.2024
(51) Int. Cl.: G06F 9/38, G06F 15/80

(54) **PROCESSOR, INSTRUCTION PROCESSING METHOD, AND ELECTRONIC DEVICE COMPRISING PROCESSOR**

(30) Priority: 09.09.2024 CN 202411261193
(71) Applicant: Hygon Information Technology Co., Ltd., Tianjin 300392 (CN)
(72) Inventor: ZHANG, Wei, Tianjin 300392 (CN); CUI, Zehan, Tianjin 300392 (CN)
(74) Representative: Maiwald GmbH
(86) International application number: PCT/CN2024/142666
(87) International publication number: WO 2026/051272

(57) **Abstract**

Provided in the embodiments of the present disclosure are a processor, an instruction processing method, and an electronic device comprising the processor. The processor comprises a plurality of processor cores and an accelerator module, each of the plurality of processor cores being configured to execute first-type instructions; the accelerator module comprises at least one accelerator engine that is configured to execute second-type instructions different from the first-type instructions; the accelerator module is coupled to the plurality of processor cores and shared by the plurality of processor cores; each of the plurality of processor cores dispatches, from an instruction stream processed thereby, an object instruction belonging to the second-type instructions to the accelerator module for execution, and receives from the accelerator module an execution result message for the object instruction.

## Description

This application claims priority to Chinese Patent Application No. 202411261193.6, filed on September 09, 2024, the content of which is hereby incorporated by reference in its entirety as part of this application.

### TECHNICAL FIELD

Embodiments of the present disclosure relate to a processor, an instruction processing method, and an electronic apparatus including a processor.

### BACKGROUND

An accelerator unit (or "accelerator" for short) of a Central Processing Unit (CPU) usually refers to a technique that improves the computing power of the CPU in a specific application area, e.g., a technique that increases the processing speed and efficiency of the CPU in a specific application area. The accelerator unit integrated in the CPU is generally categorized into a CPU core internal accelerator and a CPU core external accelerator according to a connection relationship with the CPU core.

However, the CPU accelerators may suffer from low utilization rate or high load offloading overhead.

### SUMMARY

At least one embodiment of the present disclosure provides a processor, comprising: a plurality of processor cores, wherein each of the plurality of processor cores is configured to execute a first type of instructions; and an accelerator module, wherein the accelerator module comprises at least one accelerator engine configured to execute a second type of instructions different from the first type of instructions; wherein the accelerator module is coupled to and shared by the plurality of processor cores, the plurality of processor cores each dispatches an object instruction belonging to the second type of instructions in an instruction stream processed by itself to the accelerator module for execution and receives an execution result message of the object instruction from the accelerator module.

For example, according to embodiments of the present disclosure, the accelerator module is dynamically coupled to the plurality of processor cores to receive, from the plurality of processor cores, same or different object instructions belonging to the second type of instructions.

For example, according to embodiments of the present disclosure, each of the plurality of processor cores is further configured to: recognize whether a current instruction in the instruction stream belongs to the first type of instructions or the second type of instructions, dispatch the current instruction to a pipeline of the processor core in response to the current instruction belonging to the first type of instructions, and dispatch the current instruction to the accelerator module as the object instruction in response to the current instruction belonging to the second type of instructions.

For example, according to embodiments of the present disclosure, wherein each of the plurality of processor cores is further configured to: make the object instruction enter a dispatch queue to be dispatched, for the object instruction, assign an entry in a reorder buffer, and dispatch the object instruction to the accelerator module in response to the object instruction becoming an oldest instruction in the reorder buffer.

For example, according to embodiments of the present disclosure, each of the plurality of processor cores is further configured to: make the object instruction enter a dispatch queue to be dispatched, wait for emptying of a reorder buffer, and dispatch the object instruction to the accelerator module in response to the emptying of the reorder buffer.

For example, according to embodiments of the present disclosure, the accelerator module is further configured to return a processing result of the object instruction to a corresponding processor core, and the execution result message of the object instruction comprises an execution result of the object instruction; or the accelerator module is further configured to store the processing result of the object instruction into a memory coupled to the plurality of processor cores, and the execution result message of the object instruction includes a storage address of the execution result of the object instruction in the memory.

For example, according to embodiments of the present disclosure, each of the plurality of processor cores comprises: an instruction fetching module configured to fetch instructions; a decoding module configured to decode a fetched instruction into one or more micro-operations; and a dispatching module configured to dispatch the one or more micro-operations to a processor core pipeline or the accelerator module.

For example, according to embodiments of the present disclosure, the one or more micro-operations comprise: a read and fill micro-operation for reading an instruction parameter and filling an operand, and a load offloading micro-operation for dispatching a workload to an accelerator engine that executes the one or more micro-operations.

For example, according to embodiments of the present disclosure, in response to the accelerator engine and a corresponding processor core being in a synchronous operation mode, the accelerator module is configured to return an execution status to the corresponding processor core in response to an end of execution of the object instruction in the accelerator module.

For example, according to embodiments of the present disclosure, the one or more micro-operations further comprise: a read response micro-operation for making the at least one accelerator engine return an execution status to a corresponding processor core.

For example, according to embodiments of the present disclosure, the accelerator module further comprises: an arbiter, coupled between the plurality of processor cores and the at least one accelerator engine, wherein the arbiter is configured to arbitrate object instructions received from the plurality of processor cores to assign the object instructions to a target accelerator engine of the at least one accelerator engine.

For example, according to embodiments of the present disclosure, the accelerator module further comprises: a memory interface coupled to at least one accelerator engine and comprising a translation lookaside buffer, wherein the at least one accelerator engine shares the translation lookaside buffer.

For example, according to embodiments of the present disclosure, the translation lookaside buffer comprises one or more translation lookaside buffer entries, and each of the one or more translation lookaside buffer entries comprises a processor core identity identification, the processor core identity identification being used for identifying a processor core to which a current translation lookaside buffer entry belongs among the plurality of processor cores.

For example, according to embodiments of the present disclosure, each of the one or more translation lookaside buffer entries further comprises: a process identity identification for identifying a process to which the current translation lookaside buffer entry belongs.

For example, according to embodiments of the present disclosure, each of the plurality of processor cores is further configured to send a translation lookaside buffer entry operation instruction to the accelerator module, and the translation lookaside buffer entry operation instruction, when executed, causes the accelerator module to perform one or more of following operations: invalidating all translation lookaside buffer entries; invalidating a translation lookaside buffer entry having a specific process identity identification; invalidating a translation lookaside buffer entry having a specific process identity identification and a specific virtual page number; invaliding a translation lookaside buffer entry having a specific processor core identity identification; invaliding a translation lookaside buffer entry having a specific processor core identity identification and a specific process identity identification; and invaliding a translation lookaside buffer entry having a specific processor core identity identification, a specific process identity identification, and a specific virtual page number.

For example, according to embodiments of the present disclosure, the accelerator module further comprises a data cache, and each of the plurality of processor cores is further configured to send a cache operation instruction to the accelerator module, and the cache operation instruction, when executed, causes the accelerator module to perform one or more of following operations: invalidating all cache lines in the data cache; invalidating one or more cache lines in the data cache; flushing all the cache lines in the data cache; and flushing one or more cache lines in the data cache.

For example, according to embodiments of the present disclosure, the at least one accelerator engine comprises a control register, and the control register is configured to store the translation lookaside buffer entry operation instruction and the cache operation instruction.

For example, according to embodiments of the present disclosure, the accelerator module further comprises a page table walker that is independent of the plurality of processor cores, wherein the accelerator module is further configured to: in response to a miss in the translation lookaside buffer occurring for the at least one accelerator engine, complete a page table access using the independent page table walker.

For example, according to embodiments of the present disclosure, the accelerator module further comprises a page table walker router connected to at least some of the plurality of processor cores, and the object instruction further includes a processor core identity identification, wherein the accelerator module is further configured to: in response to a miss in the translation lookaside buffer occurring for the at least one accelerator engine, access a page table walker in a corresponding processor core based on the processor core identity identification using the page table walker router, to complete a page table access.

For example, according to embodiments of the present disclosure, each of the at least one accelerator engine comprises: a fetch front-end module configured to decode the object instruction received from the arbiter; one or more back-end execution modules configured to execute the object instruction decoded by the fetch front-end module; a memory interface arbiter module configured to arbitrate a memory access request from the one or more back-end execution modules; and a complete module configured to submit a processing result of the object instruction.

For example, according to embodiments of the present disclosure, the fetch front-end module comprises a load offloading buffer, and the load offloading buffer is configured to store object instruction parameters and operands.

At least one embodiment of the present disclosure provides an electronic apparatus, including the processor described above.

At least one embodiment of the present disclosure provides an instruction processing method, including: receiving, by a plurality of processor cores, an instruction stream to be executed, wherein the instruction stream comprises a first type of instructions and a second type of instructions different from the first type of instructions; processing, by the plurality of processor cores, the first type of instructions in a corresponding instruction stream, respectively; and dispatching, by each of the plurality of processor cores, an object instruction belonging to the second type of instructions in an instruction stream processed by the processor core to an accelerator module for execution, and receiving an execution result message of the object instruction from the accelerator module, wherein the accelerator module comprises at least one accelerator engine configured to execute the second type of instructions, and the accelerator module is coupled to and shared by the plurality of processor cores.

### BRIEF DESCRIPTION OF DRAWINGS

The above and other aspects, features and advantages of specific embodiments of the present disclosure will become more apparent from the following description taken in conjunction with the accompanying drawings, in which:
Fig. 1A is a schematic diagram of a processor according to at least one embodiment of the present disclosure;
Fig. 1B is a schematic diagram of an example processor core according to at least one embodiment of the present disclosure;
Fig. 2 is a schematic diagram of a processor according to at least one embodiment of the present disclosure;
Fig. 3 is a schematic diagram of data interaction between a processor core and an accelerator module according to at least one embodiment of the present disclosure;
Fig. 4 is a schematic diagram of MOPs according to at least one embodiment of the present disclosure;
Fig. 5 is a schematic diagram of the way in which an accelerator engine accesses a TLB and a PTW router, according to at least one embodiment of the present disclosure;
Fig. 6 is a schematic diagram of operations on a TLB in an accelerator module and an optional data cache by the processor core according to at least one embodiment of the present disclosure;
Fig. 7 is a schematic structural diagram of an accelerator module according to at least one embodiment of the present disclosure;
Fig. 8 is an instruction processing method according to at least one embodiment of the present disclosure; and
Fig. 9 is an electronic apparatus including a processor according to at least one embodiment of the present disclosure.

### DETAILED DESCRIPTION

Before proceeding to the following detailed description, it may be beneficial to set forth the definitions of certain words and phrases used throughout this disclosure. The terms "including" and "containing" and their derivatives refer to including but not limited to. The term "or" is inclusive, meaning and/or. The phrase "associated with" and its derivatives refer to including, included in, interconnected with, contained in, connected with, coupled with, communicated with, cooperated with, interwoven with, juxtaposed with, approached with, bound with, or having the property of. The term "controller" refers to any device, system or part thereof that controls at least one operation. Such a controller may be implemented in hardware or a combination of hardware and software and/or firmware. The functions associated with any particular controller can be centralized or distributed, whether local or remote. The phrase "at least one", when used with a list of items, means that different combinations of one or more of the listed items can be used, and only one item in the list may be needed. For example, "at least one of A, B and C" includes any one of the following combinations: A, B, C, A and B, A and C, B and C, A and B and C.

Definitions of other specific words and phrases are provided throughout this disclosure. It should be understood by those skilled in the art that in many cases, if not most cases, this definition also applies to the previous and future use of words and phrases so defined.

The following description of various embodiments of the principles of the present disclosure, in conjunction with the accompanying drawings, is provided for illustrative purposes only and should not be construed in any way as limiting the scope of the present disclosure. Those skilled in the art will appreciate that the principles of the present disclosure may be implemented in any system or apparatus that is appropriately configured. In some cases, the actions described in the specification may be performed in a different order and may still achieve the desired results. Moreover, the processes depicted in the accompanying drawings do not necessarily require the particular order or consecutive order shown to achieve the desired results. In particular embodiments, multitasking and parallel processing may be advantageous.

An accelerator unit integrated in a CPU is generally categorized into a CPU core internal accelerator and a CPU core external accelerator according to a connection relationship with the CPU core. Design features of the CPU core internal accelerator may lie in that the CPU core internal accelerator and the CPU share an Instruction Set Architecture (ISA), and a decision is made inside the CPU based on instruction code as to whether to dispatch to the accelerator for execution or to use an ordinary CPU arithmetic and logic unit (ALU) for execution. Design features of the CPU core external accelerator may lie in that the CPU core external accelerator is external to the CPU core and is connected to the CPU core via an IO bus (e.g., Peripheral Component Interconnect Express ( PCIE)), and the CPU operates the accelerator to perform arithmetic by reading and writing an IO address of the accelerator.

Due to the close integration with a CPU pipeline, the CPU core internal accelerator is generally in a one-to-one relationship with the CPU core (i.e., one CPU core matches one accelerator). For a multicore CPU chip with multiple different types of accelerators, each CPU core is generally required to be integrated with the same combination of multiple types of accelerators. However, in practice, most CPU workloads may not need all CPU cores to run the same type of accelerated computing task, which results in a large number of accelerators having low utilization efficiency. In addition, if each core of the multicore CPU is integrated with different combinations of multiple types of accelerators according to needs (e.g., types of CPU workloads), it may lead to the problem of multicore heterogeneity, bringing challenges for software development/deployment and migration, and resulting in an increase in costs for development/deployment and migration.

For the CPU core external accelerator, although such an accelerator based on the IO bus connection may realize function sharing by means of a driver, the IO bus connection may suffer from a high load offloading overhead. In particular, the efficiency of the CPU core external accelerator may be significantly reduced in applications with small workload granularity.

With respect to the modern multicore CPU, based on considerations on implementation and performance, a plurality of (e.g., 4-8) CPU cores together with their accompanying Level 1 data cache (L1D$), Level 2 cache (L2$), Level 3 cache (L3$), etc., are packaged into a module called a core-cluster. The plurality of CPU cores in the core-cluster may generally share the L2$ or L3$. A plurality of same core clusters are connected together through internal interconnection, which may form an integrated multi-core CPU system.

The present disclosure provides a processor, including a plurality of processor cores and an accelerator module, where each of the plurality of processor cores is configured to execute a first type of instructions; the accelerator module includes at least one accelerator engine configured to execute a second type of instructions different from the first type of instructions; the accelerator module is coupled to and shared by the plurality of processor cores, each of the plurality of processor cores each dispatches an object instruction belonging to the second type of instructions in an instruction stream processed by the processor core to the accelerator module for execution and receives an execution result message of the object instruction from the accelerator module.

The processor, according to the present disclosure, may overcome or alleviate the difficulty of sharing accelerator engines having the same or different functions between cores in a core-cluster. For example, in many application scenarios, accelerators (e.g., the type and number of accelerator engines) used for CPU loads in different types of CPU cores are different. However, due to static binding between the CPU cores and the accelerators, each of the CPU cores is required to be integrated with the same type of accelerator engine, which leads to the problem of low utilization rate of the accelerator engines in most cases.

In the processor according to the present disclosure, a plurality of cores in the core-cluster may share accelerator engines having the same or different functions. The type and number of accelerator engines may be configured in a targeted manner depending on differences in application areas where the entire CPU faces, and has no direct binding relationship with the number of CPU cores in the core-cluster. In this way, the accelerator engines may be dynamically assigned and bound to the CPU cores, thus increasing the utilization rate of the accelerator engines in different application scenarios.

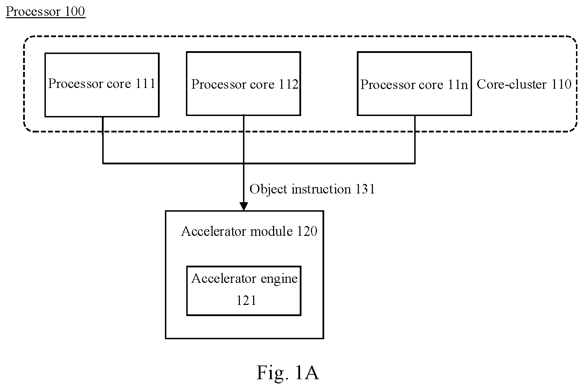

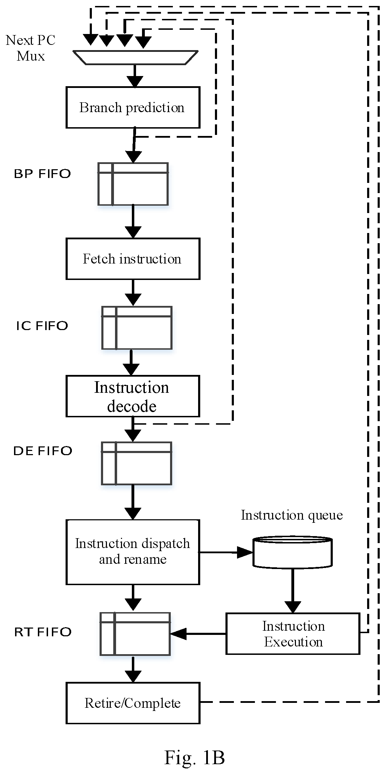

Fig. 1A is a schematic diagram of a processor according to at least one embodiment of the present disclosure, and Fig. 1B is a schematic diagram of an example processor core according to at least one embodiment of the present disclosure.

As shown in Fig. 1A, the processor 100 may include a plurality of processor cores 111, 112, ..., and 11n, and an accelerator module 120.

The plurality of processor cores 111-11n may be components of the processor 100 that execute instructions. Each of the plurality of processor cores 111-11n may execute program code independently while processing different tasks or threads. The plurality of processor cores 111-11n may improve the parallel processing capability of the processor, allowing a computer to perform multiple tasks or more complex calculations more quickly. Each of the plurality of processor cores 111-11n may execute a first type of instructions, e.g., instructions executed by a pipeline of a processor core itself. The instructions include, but are not limited to, arithmetic logic instructions (e.g., instructions such as add, subtract, multiply, divide, and, or, no, xor), data transfer instructions (e.g., instructions such as load, store, input, and output), control flow instructions (e.g., unconditional jump, subroutine call, and return), string processing instructions (e.g., compare, move, and search for strings), floating-point operation instructions (e.g., arithmetic operations on floating-point numbers, such as add, subtract, multiply, divide, and square root), privileged instructions (e.g., for operating system-level tasks such as interrupt control, and virtual memory management), and the like. The plurality of processor cores 111-11n may form a core-cluster 110.

Fig. 1B illustrates a pipeline of an exemplary processor core, where the dashed lines with arrows in the figure indicate a redirected instruction stream. As shown in Fig. 1B, a processor core (e.g., a CPU core) of a single-core processor or a multi-core processor improves instruction level parallelism through pipelining. The processor core consists of multiple pipeline stages internally. For example, after program counters from various sources are fed to the pipeline and a next Program Counter (PC) is selected through a multiplexer (Mux), an instruction corresponding to that program counter will undergo branch prediction, instruction fetch, instruction decode, instruction dispatch and rename, execute, retire/complete, and the like. Waiting queues are set between the pipeline stages according to needs. These queues are usually first-in-first-out (FIFO) queues. For example, after a branch prediction unit, a branch prediction (BP) FIFO queue is set to store branch prediction results; after an instruction fetch unit, an instruction cache (IC) FIFO queue is set to cache the fetched instructions; after an instruction decode unit, a decode (DE) FIFO is set to cache the decoded instructions; after an instruction dispatch and rename unit, a retire (RT) FIFO queue is set to cache instructions of waiting for retire confirmation after execution. Moreover, the pipeline of the processor core further includes an instruction queue to cache execution instructions of an instruction-execution waiting unit after instruction dispatching and renaming. In order to support a high operating frequency, each pipeline stage may contain multiple pipeline phases (clock cycles). Although each pipeline phase performs a limited operation, each clock may be minimized, so that the performance of the CPU core is improved by increasing the operating frequency. Each pipeline phase may also hold more instructions (i.e., superscalar technology) to further improve the performance of the processor core.

The processor core translates each architectural instruction into one or more micro-operations (mop) in a micro-architecture. Each of the mops performs limited operations, which may ensure that each pipeline phase is short enough to increase the operating frequency of the processor core. For example, a memory read instruction (load) may be translated into an address generation mop and a memory read mop. The second mop depends on the result of the first mop, so that the second mop will start executing only after the first mop has finished. The mop contains multiple microarchitecture-related domains and is used for transferring relevant information between pipeline phases.

Speculative Execution is another technique to improve processor performance. This technique executes the instructions that follow an instruction before it has finished executing. A branch prediction unit (branch predictor) at the front end of the processor core predicts a jump direction of a branch instruction and prefetches and executes the instruction in that direction. Another technique for prediction execution is to execute a memory read instruction before addresses of all previous memory write instructions have been obtained. prediction execution further improves the instruction level parallelism, thereby dramatically improving the performance of the processor core. When an error in prediction execution occurs, such as when an error in branch prediction is found, or when a write instruction before a memory read instruction rewrites the same address, all instructions in the pipeline following an errant instruction need to be refreshed (or "flushed" or "cleared"), and then the program jumps to the point of error for re-execution, to ensure the correctness of program execution. To support prediction execution, the microarchitecture of the processor core also needs to support an architecture register recovery mechanism to ensure that an architecture register always has a correct value during prediction execution.

An operating system often needs to support the simultaneous running of multiple processes while using the CPU. To simplify multi-process management and enhance security, application programs use full virtual addresses, e.g., an application program with 32-bit addressing has up to 232 = 4GB of virtual address space available. During the running of the program, these virtual addresses are mapped into multiple memory pages, and each of the pages has its own physical storage address. When an application program accesses instructions and data, it is necessary to first translate the virtual addresses of the instructions and data into physical addresses, and detect whether the application program's access to the page is legal or not, and then obtain the corresponding data from a memory or cache and transfer the data to the CPU core. The process of translating from a virtual address to a physical address is called address translation. The mapping of a virtual address to a physical address is stored in tables of the memory, and access to these tables in the memory also takes hundreds of clocks. In order to reduce these memory accesses, inside the CPU core, multiple levels of caches are used for storing the mapping used recently, and these specific caches are each called a translation lookaside buffer or table lookaside buffer (TLB). During querying of a TLB deletion or miss, the CPU core needs to browse a table page by means of a PageTable Walker (PTW) to find a required PageTable Entry (PTE) for address translation.

The pipeline of the processor core of the embodiment of the present disclosure is not limited to the example shown in Fig. 1A. Some parts may be omitted or other parts may be added as needed. The embodiments of the present disclosure do not limit the instruction set executed by the architecture of the processor core (e.g., x86, ARM, MIPS, and RISC-V).

The accelerator module 120 may be coupled to and shared by the plurality of processor cores 111-11n. The accelerator module 120 may improve the performance or energy efficiency ratio of the processor cores 111-11n in the process of performing a specific computing task or in a specific scenario, thus improving the performance of the overall processor 100. For example, in some scenarios, not all of the processes running on the processor cores of the core-cluster need to access the accelerator engine. That is, only processes running on individual processor core may need to access the accelerator engine among the processes running on the processor cores of the core-cluster. In this case, it may be wasteful to statically bind an accelerator hardware module to each processor core.

The accelerator module 120 may include at least one accelerator engine 121. Although only one accelerator engine 121 is illustrated in Fig. 1A, example embodiments may include more accelerator engines. The at least one accelerator engine 121 may include a plurality of accelerator engines of the same or different types. The accelerator engine may include, but is not limited to, an application-specific integrated circuit (ASIC), a graphics processing unit (GPU), a tensor processing unit (TPU), a neural network processing unit (NPU), a field programmable gate array (FPGA), a digital signal processor (DSP), and the like. The at least one accelerator engine 121 may be configured to execute a second type of instructions different from the first type of instructions. The second type of instructions are instructions that can be executed by the accelerator module, e.g., encryption and decryption, hash computation, compression, decompression, and the like, but the present disclosure is not limited thereto.

The plurality of processor cores 111-11n may each dispatch an object instruction 131 belonging to the second type of instructions in an instruction stream processed by itself to the accelerator module 120 for execution. For example, the plurality of processor cores 111-11n may each dispatch an object instruction 131 belonging to the second type of instructions to at least one accelerator engine 121 of the accelerator 120 for execution. The plurality of processor cores 111-11n may receive an execution result message of the object instruction from the accelerator module 120. For example, the plurality of processor cores 111-11n may receive an execution result message of the object instruction from the at least one accelerator engine 121 in the accelerator module 120.

The plurality of processor cores 111-11n may share at least one accelerator engine 121 having the same or different functions. The type and number of accelerator engines 121 may be configured in a targeted manner depending on differences in application areas where the CPU faces, and has no direct binding relationship with the number of the plurality of processor cores 111-11n.

In one embodiment, during the operation of the CPU, the accelerator module 120 may be dynamically coupled to the plurality of processor cores 111-11n to receive the same or different object instructions belonging to the second type of instructions from one or more of the processor cores 111-11n, for example, to receive the same or different object instructions from a plurality of processor cores in the same operation cycle (clock cycle) or in different operation cycles. For example, at least one accelerator engine 121 in the accelerator module 120 may be dynamically coupled to the plurality of processor cores 111-11n.

For example, in response to a load of the processor 100 being a first type of load, at least one accelerator engine 121 may receive an object instruction from one (e.g., the processor core 111) of the plurality of processor cores 111-11n and send an execution result message of the object instruction to that processor core. In response to the load of the processor 100 being changed from the first type of load to a second type of load, at least one accelerator engine 121 may change to receive an object instruction from another processor core (e.g., one of the processor cores 112-11n) of the plurality of processor cores 111-11n and send an execution result message of the object instruction to that other processor core.

In this manner, the accelerator engine 121 may be dynamically assigned and bound to the plurality of processor cores 111-11n, thus increasing the utilization rate of the accelerator engines in different application scenarios.

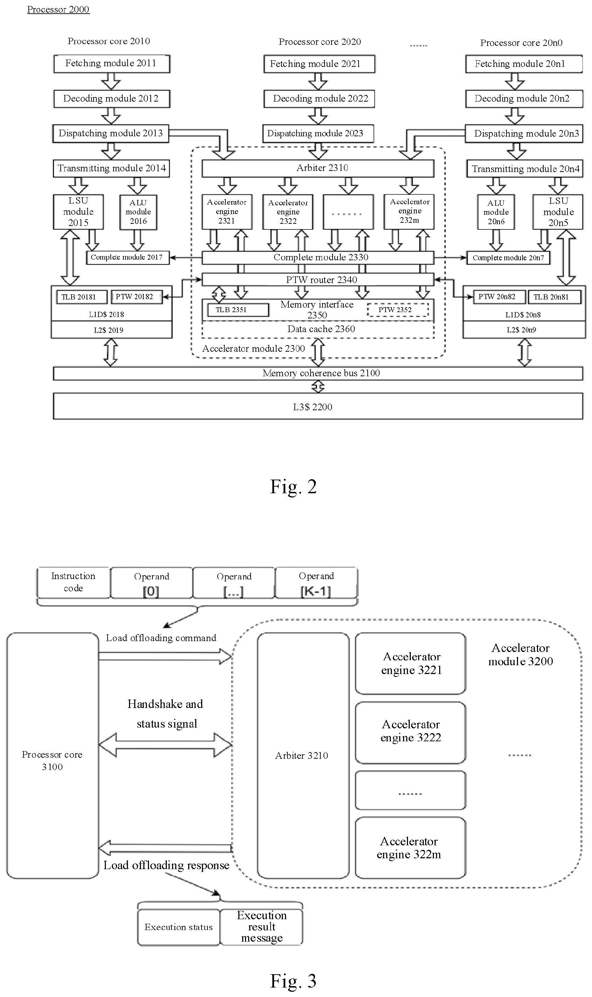

Fig. 2 is a schematic diagram of a processor according to at least one embodiment of the present disclosure.

As shown in Fig. 2, the processor 2000 may include a plurality of processor cores 2010, 2020, ..., and 20n0 as well as an accelerator module 2300 shared by the processor cores 2010, 2020, ..., and 20n0, and a level 3 cache L3$2200.

The plurality of processor cores 2010, 2020, ..., and 20n0 may form a core-cluster. Each core-cluster may have four to eight processor cores, i.e., the number of the plurality of processor cores 2010, 2020, ..., and 20n0 may be 4-8, but the embodiment of the present disclosure is not limited thereto, and each core-cluster may include more or fewer processor cores.

Although the processor cores 2010, 2020, ..., and 20n0 (n is a natural number greater than 1) are illustrated in Fig. 2, this is merely exemplary, and the connection topology of the processor cores and accelerator module in the core-cluster may be more flexible. For example, there may be one accelerator module shared by every two processor cores. For another example, there may be more or fewer processor cores sharing one or more accelerator modules, etc.

Although Fig. 2 illustrates the structures of the plurality of processor cores 2010, 2020, ..., and 20n0 as being the same, those skilled in the art can appreciate that one or more of the plurality of processor cores 2010, 2020, ..., and 20n0 may have different structures.

Each processor core may recognize whether a current instruction in a corresponding instruction stream processed by itself is the first type of instruction or the second type of instruction. For example, each processor core may recognize whether the current instruction to be processed is a processor core instruction or an accelerator instruction. In response to recognizing that the current instruction is a processor core instruction, each processor core may dispatch the current instruction to its own pipeline. In response to recognizing that the current instruction is an accelerator instruction, each processor core may dispatch the current instruction to the accelerator module 2300 for use as an object instruction.

The plurality of processor cores 2010, 2020, ..., and 20n0 may include fetching modules 2011, 2021, ..., and 20n1, respectively. Each of the fetching modules 2011, 2021, ..., and 20n1 may be configured to fetch instructions. For example, each fetching module may find, via an address bus, a location in the memory of an instruction to be executed by the processor 2000 and fetch the instruction from the memory. Each fetching module may transmit the fetched instruction to a corresponding decoding module.

The plurality of processor cores 2010, 2020, ..., and 20n0 may include decoding modules 2012, 2022, ..., and 20n2, respectively. The decoding modules 2012, 2022, ..., and 20n2 each may be configured to decode the fetched instruction into one or more MOPs. For example, each decoding module may decode an instruction from a corresponding fetching module to recognize the type of the instruction and operands required by the instruction.

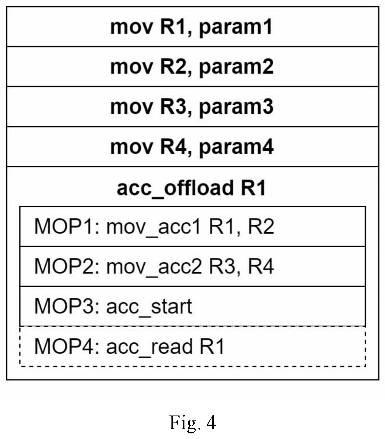

The plurality of processor cores 2010, 2020, ..., and 20n0 may include dispatching modules 2013, 2023, ..., and 20n3, respectively. Each of the dispatching modules 2013, 2023, ..., and 20n3 may be configured to dispatch one or more MOPs to a processor core pipeline or the accelerator module, with specific details of the one or more MOPs referenced below with respect to Fig. 4.

Each dispatching module may dispatch one or more MOPs to the accelerator module 2300 based on the fact that the one or more MOPs from the corresponding decoding module is an MOP(s) for the accelerator module.

In one embodiment, each processor core may be configured such that an object instruction to be dispatched to the accelerator module 2300 enters a dispatch queue (not shown in the figure) of the dispatching module to be dispatched. Each processor core may assign entries in a reorder buffer (ROB) in response to the object instruction. In response to the object instruction becoming the oldest instruction in the ROB, each processor core may dispatch an object instruction to the accelerator module 2300. The object instruction becoming the oldest instruction in the ROB means that instructions prior to the object instruction have already been executed and submitted, and accordingly, for the object instruction, there are no execution errors due to instruction dependency or data dependency.

Alternatively, or additionally, in another embodiment, each processor core may be configured to allow the object instruction to enter the dispatch queue to be dispatched. Each processor core can wait for re-order buffer ROB to empty. In response to the emptying of the ROB, each processor core may dispatch an instruction to the accelerator module 2300. The emptying of the ROB also means that instructions prior to the object instruction have been executed and submitted, and accordingly, for the object instruction, there are no execution errors due to instruction dependency or data dependency.

Each dispatching module may dispatch one or more MOPs to a corresponding transmitting module based on the fact that the one or more MOPs from the corresponding decoding module is an MOP(s) for the processor core pipeline.

The plurality of processor cores 2010, 2020, ..., and 20n0 may include transmitting modules 2014, 2024 (not shown in Fig. 2), ..., and 20n4, respectively. The transmitting modules 2014, 2024, ..., and 20n4 each may extract an instruction out of a dispatch queue of the processor core pipeline and dispatch the instruction to a subsequent module for execution. For example, each transmitting module may extract an instruction from a corresponding dispatching module out of the dispatch queue of the processor core pipeline and dispatch the instruction to the corresponding LSU module and ALU module.

The plurality of processor cores 2010, 2020, ..., and 20n0 may include load and store unit (LSU) modules 2015, 2025 (not shown in Fig. 2), ..., and 20n5, respectively. Each of the LSU modules 2015, 2025, ..., and 20n5 may receive and execute instructions on loading and storing. The instructions on loading and storing allow the processor 2000 to access data stored in the memory. In performing the load and store operations, each LSU module may generate a virtual address. The virtual address may be converted to a physical address through an address translation process (e.g., by a corresponding TLB or PTW) to read or write data from or to the physical memory. Each LSU module may load data from the memory into a register of the processor 2000 or store data from the register of the processor 2000 back into the memory. Each LSU module may send its execution result to a corresponding completion module.

The plurality of processor cores 2010, 2020, ..., and 20n0 may include independent level 1 data caches (e.g., L1D$ 2018, L1D$ 2028 (not shown in Fig. 2), ..., and L1D$ 20n8) and level 2 caches (e.g., L2$ 2029, L2$ 2029 (not shown in Fig. 2), ..., and L2$ 20n9), respectively. The plurality of processor cores 2010, 2020, ..., and 20n0 may share the level 3 cache (L3$) 2200 via a memory coherence bus 2100. Each of the first-level data caches may include a TLB (e.g., TLB 20181, TLB 20281, ..., and TLB 20n81) and a PTW (e.g., PTW 20182, PTW 20282, ..., and PTW 20n82).

Each TLB may be used for storing a copy of a page table entry that is currently most likely to be accessed by a corresponding processor core. These page table entries include mapping information from virtual addresses to physical addresses. When the corresponding processor core needs to access a virtual address, the processor core may first check whether the mapping information for that address already exists in the TLB. If it exists (i.e., there is a hit), the processor core may directly use the physical address in the TLB to access the memory, thus avoiding a direct access to the page table in the memory, reducing the number of access to the memory, and increasing the speed of address translation.

When the mapping information for a virtual address does not exist in the TLB (i.e., there is a TLB miss), the processor core may access the page table in the memory through the corresponding PTW to obtain the physical address corresponding to the virtual address. The PTW may find the matching virtual address by traversing the page table, and return the found physical address to the corresponding processor core. The PTW may also look for the corresponding entry from the page table and backfill it to the TLB.

The plurality of processor cores 2010, 2020, ..., and 20n0 may include arithmetic and logic unit (ALU) modules 2016, 2026 (not shown in Fig. 2), ..., and 20n6, respectively. Each of the LSU modules 2016, 2026, ..., and 20n6 may perform basic arithmetic and logic operations, etc., according to instructions received from the corresponding transmitting modules. Each ALU module may send its execution result to a corresponding complete module.

The plurality of processor cores 2010, 2020, ..., and 20n0 may include complete modules 2017, 2027 (not shown in Fig. 2), ..., and 20n7, respectively. Each of the complete modules 2017, 2027, ..., and 20n7 may mark a corresponding instruction as completed in the ROB. Each complete module may also write an execution result of the corresponding instruction to the ROB for submission.

The processor 2000 may include an accelerator module 2300. The plurality of processor cores 2010, 2020, ..., and 20n0 may share an instruction set architecture (ISA) front-end with the accelerator module 2300, where instructions include, for example, fetch, decode, and dispatch. The accelerator module 2300 may include an arbiter 2310. The arbiter 2310 may be coupled between the plurality of processor cores and the accelerator engine. Since the accelerator module 2300 is shared by the plurality of processor cores, the arbiter 2310 of the accelerator module 2300 may arbitrate object instructions received from the plurality of processor cores and assign the instructions to a target accelerator engine of the accelerator engine, thereby improving the efficiency of assignment and utilization of computing resources in the accelerator module. After the object instructions are assigned to the target accelerator engine by the arbiter 2310, they may be executed in the target accelerator engine. If the arbitration of an object instruction is unsuccessful, the corresponding processor core may wait until the object instruction can be assigned to a proper accelerator engine by the arbiter 2310.

The accelerator module 2300 may include a plurality of accelerator engines 2321, 2322, ..., and 232m, where m is a natural number greater than 0. The number and type of accelerator engines included in the accelerator module 2300 may be flexibly configured according to the usage requirements of the processor. The accelerator engines may be described with reference to the description of Fig. 1A, which will not be repeated here.

The accelerator module 2300 may include a memory interface 2350 independent of the plurality of processor cores for access to the memory. The accelerator module 2300 may complete address translation from a virtual address to a physical address independently of the plurality of processor cores. The memory interface 2350 may be coupled to the accelerator engines 2321, 2322, ..., and 232m and includes a TLB 2351. The TLB 2351 may be shared by the accelerator engines 2321, 2322, ..., and 232m.

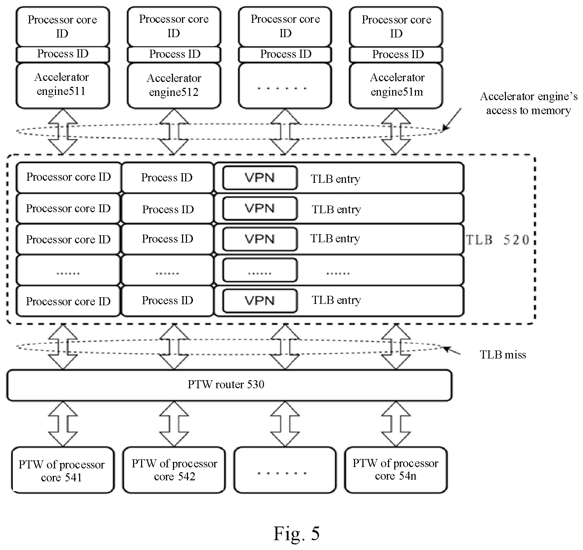

When the corresponding accelerator engine needs to access a virtual address, the accelerator engine may first check whether the mapping information for that address already exists in the TLB. If it exists (i.e., there is a hit), the accelerator engine may access the memory directly using the physical address in the TLB. Specific details about page table entries in the TLB 2351 may be referred to the description of Fig. 5 below.

The accelerator module 2300 may include a PTW router 2340. When a TLB miss occurs, a page table access may be completed using the PTW in the processor core to which the accelerator engine is bound. In this case, an independent PTW may not be configured in the accelerator module 2300. For example, the corresponding accelerator engine may access the page table in the memory through the PTW router 2340 to obtain the physical address corresponding to the virtual address. When the processor core dispatches instructions to the accelerator module, a process ID of the current process and a processor core ID of the current processor core in a core-cluster may be carried in the dispatched instruction. The corresponding accelerator engine may use the PTW router 2340 in the event of a TLB miss and look for a PTW in the corresponding processor core based on the processor core ID so as to obtain the required page table entry.

The memory interface 2350 may include an optional PTW 2352. The accelerator module 2300 may use the PTW 2352 to independently complete the page table access without accessing the PTW in the processor core. For example, when the accelerator module 2300 includes the independent PTW 2352, if a TLB miss occurs, the accelerator engine may access the page table in the memory through the PTW 2352 to obtain the physical address corresponding to that virtual address. By independently configuring the PTW 2352 for the accelerator module 2300, the connection required for the PTW router 2340 to access the processor core can be omitted. Accordingly, the size of the processor 2000 can be reduced.

In at least one embodiment, the accelerator module 2300 may include an optional data cache 2360. For example, the accelerator module 2300 may be configured with the optional data cache 2360 in the case that the accelerator module 2300 is in need of improving the memory access performance. When the separate data cache 2360 is not required, the accelerator module 2300 may be directly coupled to the Level 3 cache L3$ shared by multiple cores in the core-cluster via the memory interface 2350.

The accelerator module 2300 may include a complete module 2330. The complete module 2330 may mark a corresponding instruction as completed in the ROB. The complete module 2330 may also send an execution result of the corresponding instruction to a corresponding complete module of the completion modules 2017, 2027, ..., and 20n7. Details of data interaction between the accelerator module 2300 and the processor core may be referenced to Fig. 3 described below.

Fig. 3 is a schematic diagram of data interaction between a processor core and an accelerator module according to at least one embodiment of the present disclosure.

Fig. 4 is a schematic diagram of MOPs according to at least one embodiment of the present disclosure.

As shown in Fig. 3, a processor core 3100 may be in data interaction with an accelerator module 3200. The accelerator module 3200 may include an arbiter 3210 and accelerator engines 3221, 3222, ..., and 322m. Specific descriptions of the processor core, the accelerator module, the arbiter, and the accelerator engine may be referenced to Figs. 1A and 2 and will not be repeated here.

The processor core 3100 may send handshake and status signals to the accelerator module 3200 and may receive handshake and status signals from the accelerator module 3200. The handshake and status signals may include valid, ready, busy, and the like. The handshake and status signals may coordinate and synchronize operations of the processor core 3100 to the accelerator module 3200 to ensure the correctness and safety of data transmission and to improve the reliability and correctness of data transmission.

The processor core 3100 may send a load-offloading instruction to the accelerator module 3200. The load-offloading instruction may include instruction code and operands required for instruction execution. The processor core 3100 may receive a load-offloading response from the accelerator module 3200. The load-offloading response may include an instruction execution status and, optionally, an instruction execution result. For example, the accelerator module 3200 may return a processing result of the object instruction to a corresponding processor core, and the execution result message of the object instruction may include an execution result of the object instruction. For another example, by the accelerator module 3200, the processing result of the object instruction may be stored to a memory coupled to the plurality of processor cores, and the execution result message of the object instruction may include an address in the memory where the execution result of the object instruction is stored. The instruction execution status may indicate whether the object instruction is executed successfully or whether there is an exception to be handled.

In an ISA perspective, all instructions sent by the processor core 3100 to the accelerator module 3200 may be split into one or more MOPs in the decoding stage. The one or more MOPs are now described with reference to Fig. 4.

An object instruction in Fig. 4 needs four instruction parameters, e.g., param1, param2, param3, and param4. The processor core may use four General Purpose Registers (GRPs) including registers R1, R2, R3, and R4 to cache the four instruction parameters param1 to param4, respectively. Instructions "mov R1, param1", "mov R2, param2", "mov R3, param3", and "mov R4, param4" may be the first type of instructions dispatched to the processor core pipeline to enable the processor core to cache the four instruction parameters param1 to param4 into the four general purpose registers R1-R4.

The object instruction "acc offload R1" dispatched to the accelerator module may be used for calling an acceleration function of the accelerator module. The object instruction "acc offload R1" may be divided into four MOPs, including MOP1, MOP2, and MOP3 and optionally MOP4. The MOP1 and MOP2 may be read and fill MOPs. The read and fill MOPs may be used for reading object instruction parameters and filling operands. For example, the read and fill MOPs may move the four instruction parameters in the GPRs into a load-offloading buffer of the accelerator module. The MOP3 may be a load-offloading MOP. The load-offloading MOP may send a workload to an accelerator engine that executes one or more MOPs to start the accelerator engine. The optional MOP4 may be a read response MOP. The read response MOP causes the corresponding accelerator engine to return an instruction execution status to the processor core. After the instruction execution is complete, results obtained by the accelerator may be written to the general-purpose register R1 for subsequent use, but the present disclosure is not limited thereto, and the results may be written to the other general-purpose registers.

Returning to Fig. 3, in one embodiment, in response to the processor core 3100 and the corresponding accelerator engine in the accelerator module 3200 being in a synchronous operation mode, the processor core 3100 may not send a read response MOP to the accelerator module 3200. The accelerator engine may return an execution status to the corresponding processor core 3100 in response to the end of execution of the object instruction in the accelerator module.

In another embodiment, in response to the processor core 3100 and a corresponding accelerator engine in the accelerator module 3200 being in an asynchronous operation mode, the processor core 3100 may send a read response MOP to the accelerator module 3200. The read response MOP may synchronize the processor core 3100 with the corresponding accelerator engine and handle the exception status returned by the corresponding accelerator engine. For example, if an exception occurs when an object instruction is executed in the accelerator module 3200, the exception status may be stored within the accelerator module 3200. The exception status may be reported back to the processor core 3100 when the read response MOP is executed. In response to receiving the exception status sent by the accelerator module 3200, the processor core 3100 may jump into an exception handling program. When the exception has been handled, the entire accelerator instruction (including all split MOPs) may be re-executed. When the read response MOP is re-executed, correct execution may be achieved with the instruction execution result submitted.

Fig. 5 is a schematic diagram of the way in which an accelerator engine accesses a TLB and a PTW router, according to at least one embodiment of the present disclosure.

In order to improve the utilization efficiency of TLBs in the accelerator module, the entire accelerator module uses a centralized TLB 520. That is, all TLB entries in the TLB 520 may be dynamically shared and assigned among a plurality of accelerator engines 511-51m.

Each TLB entry in the TLB 520 may include a processor core ID, a process ID, and a virtual page number VPN. The processor core ID may identify a processor core to which the current TLB entry belongs among the plurality of processor cores. The process ID may identify a process to which the current TLB entry belongs. In one embodiment, the process ID may be an address space identifier ASID used in the TLB entry to identify which virtual address space the TLB entry belongs to. The VPN may refer to a virtual address page table index number in the TLB entry.

When the processor core dispatches instructions to the accelerator engines 511-51m in the accelerator module, the process ID of the current process and the processor core ID of the current processor core in the core-cluster may be carried in the dispatched instruction. When the corresponding accelerator engine needs to access a virtual address, the accelerator engine may first check whether the mapping information for that address already exists in the TLB entry in the TLB 520 based on the process ID and the processor core ID, etc. If it exists (i.e., there is a hit), the accelerator engine may access the memory directly using the physical address in the TLB 520.

The corresponding accelerator engine may use a PTW router 530 in the event of a TLB miss and look for a PTW in the corresponding processor core based on the processor core ID (e.g., PTWs of the processor cores 541-54n) to obtain the desired page table entry.

There is no fixed correspondence between the accelerator engines 511-51m in the accelerator module and the processor cores 541-54n in the core-cluster. The accelerator module may include m accelerator engines 511-51m. Since these accelerator engines are independent of each other and have parallel memory access requirements, the TLB 520 needs to provide m read and write ports accordingly. Since each of the m accelerator engines 511-51m may receive object instruction from each of the n processor cores 541-54n, the PTW router 530 is required to find a PTW connection path to the corresponding processor core when a TLB miss occurs.

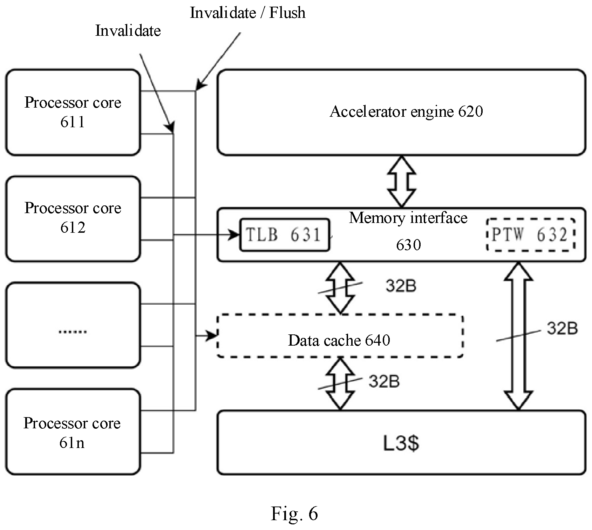

Fig. 6 is a schematic diagram of operations on a TLB in an accelerator module and an optional data cache by processor cores, according to at least one embodiment of the present disclosure. Details about processor cores 611-61n, at least one accelerator engine 620, a memory interface 630, a TLB 631, a PTW 632, and optional data caches 640 and L3$ may be described with reference to the specific description in Fig. 2, and will not be repeated herein.

When the accelerator module and the processor core are in a synchronous execution relationship, the control of the TLB 631 and the optional data cache 640 in the accelerator module needs to be synchronized with the corresponding processor core. The TLB 631 and the optional data cache 640 in the accelerator module need to be managed and controlled by the corresponding processor core.

Each of the plurality of processor cores 611-61n may send a TLB entry operation instruction to the accelerator module. The TLB entry operation instruction, when executed, may cause the accelerator module to perform one or more of the following operations: invalidating all TLB entries; invalidating a TLB entry having a specific process ID; invalidating a TLB entry having a specific process ID and a specific virtual page number; invaliding a TLB entry having a specific processor core ID; invaliding a TLB entry having a specific processor core ID and a specific process ID; and invaliding a TLB entry having a specific processor core ID, a specific process ID, and a specific virtual page number.

The accelerator module includes an optional data cache 640, where each of the plurality of processor cores 611-61n may send a cache operation instruction to the accelerator module. The cache operation instruction, when executed, may cause the accelerator module to perform one or more of the following operations: invalidating all cache lines in the data cache; invalidating one or more cache lines in the data cache; flushing all cache lines in the data cache; and flushing one or more cache lines in the data cache.

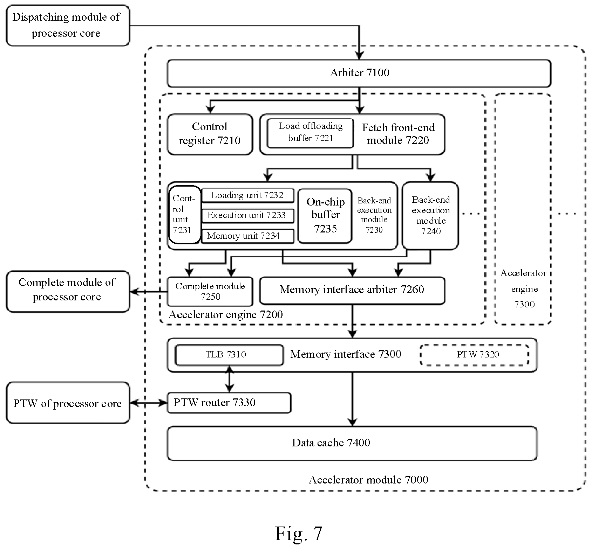

Fig. 7 is a schematic structural diagram of an accelerator module according to at least one embodiment of the present disclosure. The same components in an accelerator module 7000 of Fig. 7 as in Fig. 2 will not be described repeatedly.

The accelerator module 7000 in Fig. 7 may further include accelerator engines 7200, 7300, but the present disclosure is not limited thereto, and the accelerator module 7000 may include more accelerator engines. The accelerator engines may have similar structures. For example, the accelerator engine 7200 may include a control register 7210, a fetch front-end 7220, back-end execution modules 7230, 7240, a complete module 7250, and a memory interface arbiter module 7260.

The control register 7210 may store TLB entry operation instructions and cache operation instructions described with reference to Fig. 6. For example, the memory core may perform parameter configuration on behaviors of the accelerator engines 7200, 7300 by reading and writing the control register 7210. These parameters are issued to the accelerator engine using the MOP1 and MOP2 split by the instruction of "acc_offload R1" described with reference to Fig. 4.

The fetch front-end module 7220 may decode an object instruction received from the arbiter 7100 and assign the instruction to one or more back-end execution modules for execution. In the accelerator engine, because a plurality of back-end execution modules may have the parallel memory access requirements, the accelerator module 7000 includes a memory interface arbiter module 7260 to arbitrate memory access requests from the plurality of back-end execution modules. As shown in Fig. 3, the object instruction may carry longer instruction parameters, and the object instruction may be split into multiple MOPs by the decoding module of the processor core. This design allows a single object instruction to have the ability to describe multiple parallel operations. For example, a single object instruction may describe two matrix multiply-accumulate operations in parallel, and the two matrix multiply-accumulate operations are split into two MOPs at the decoding stage to enable parallel execution.

The fetch front-end module 7220 may include a load offloading buffer 7221. The load-offloading buffer 7221 may store object instruction parameters and operands.

One or more back-end execution modules 7230, 7240 may execute the object instructions decoded by the fetch front-end module 7220. Although two back-end execution modules 7230, 7240 are illustrated in Fig. 7, the accelerator engine 7200 may include more back-end execution modules. The back-end execution module 7230 may include a control unit 7231, a loading unit 7232, an execution unit 7233, a memory unit 7234, and an on-chip buffer (ScratchPad) 7235.

The control unit 7231 may execute a control flow of instructions and data. The loading unit 7232 may read data from a memory or other storage devices and prepare the data for use by other functional units (e.g., the execution unit 7233). The execution unit 7233 may perform various arithmetic and logic operations. The memory unit 7234 may write data processed by the execution unit 7233 back to the memory or other storage device. The on-chip buffer 7235 may be a cache area on the processor for storing temporary data.

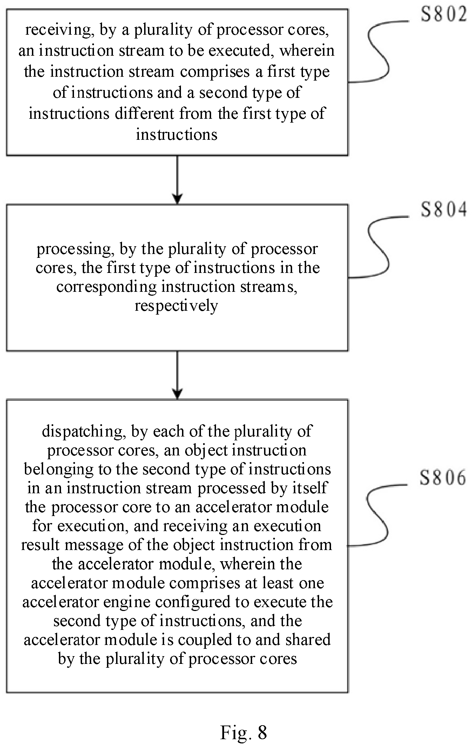

Fig. 8 is an instruction processing method according to at least one embodiment of the present disclosure. The method includes steps S802, S804 and S806.

In the step S802, receiving, by a plurality of processor cores, an instruction stream to be executed, wherein the instruction stream comprises a first type of instructions and a second type of instructions different from the first type of instructions.

In the step S804, processing, by the plurality of processor cores, the first type of instructions in the corresponding instruction streams, respectively.

In the step S806, dispatching, by each of the plurality of processor cores, an object instruction belonging to the second type of instructions in an instruction stream processed by itself the processor core to an accelerator module for execution, and receiving an execution result message of the object instruction from the accelerator module, wherein the accelerator module comprises at least one accelerator engine configured to execute the second type of instructions, and the accelerator module is coupled to and shared by the plurality of processor cores.

The instruction processing method according to at least one embodiment of the present disclosure may further include coupling the accelerator module to the plurality of processor cores dynamically to receive from the plurality of processor cores the same or different object instructions belonging to the second type of instructions.

The instruction processing method according to at least one embodiment of the present disclosure may further include recognizing whether a current instruction in the instruction stream belongs to the first type of instructions or the second type of instructions; dispatching the current instruction to a pipeline of the processor core in response to the current instruction belonging to the first type of instructions, and dispatching the current instruction to the accelerator module as the object instruction in response to the current instruction belonging to the second type of instructions.

The instruction processing method according to at least one embodiment of the present disclosure may further include, by each of the plurality of processor cores, allowing the object instruction to enter a dispatch queue to be dispatched; and assigning entries in a ROB for the object instruction; dispatching the object instruction to the accelerator module in response to the object instruction becoming an oldest instruction in the reorder buffer.

The instruction processing method according to at least one embodiment of the present disclosure may further include, by each of the processor cores, allowing the object instruction to enter a dispatch queue to be dispatched; and waiting for emptying of the ROB; dispatching the object instruction to the accelerator module in response to the emptying of the reorder buffer.

The instruction processing method according to at least one embodiment of the present disclosure may further include, by the accelerator module, returning a processing result of the object instruction to a corresponding processor core, the execution result message of the object instruction including an execution result of the object instruction; alternatively, or additionally, by the accelerator module, storing a processing result of the object instruction to a memory coupled to the plurality of processor cores, the execution result message of the object instruction including a storage address of the execution result of the object instruction in the memory.

The instruction processing method according to at least one embodiment of the present disclosure may further include fetching an instruction by a fetching module of each of the plurality of processor cores; decoding the fetched instruction into one or more micro-operations (MOPs) by a decoding module of the processor core; and dispatching the one or more MOPs to a processor core pipeline or the accelerator module by a dispatching module of the processor core.

The instruction processing method according to at least one embodiment of the present disclosure may further include, by the accelerator module, reading an instruction parameter and filling an operand using a read and fill MOP of the one or more MOPs; and by the accelerator module, issuing a workload to an accelerator engine that executes the one or more MOPs using a load offloading MOP of the one or more MOPs.

The instruction processing method according to at least one embodiment of the present disclosure may further include: in response to the accelerator engine and a corresponding processor core being in a synchronous operation mode, by the accelerator module, returning an execution status to the corresponding processor core in response to the end of execution of the object instruction in the accelerator module.

The instruction processing method according to at least one embodiment of the present disclosure may further include, by the accelerator module, allowing the at least one accelerator engine to return an execution status to a corresponding processor core using a read response MOP of the one or more MOPs.

The instruction processing method according to at least one embodiment of the present disclosure may further include, by an arbiter of the accelerator module that is coupled between the plurality of processor cores and the at least one accelerator engine, arbitrating object instructions received from the plurality of processor cores to assign the instructions to a target accelerator engine of the at least one accelerator engine.

The instruction processing method according to at least one embodiment of the present disclosure may further include allowing the at least one accelerator engine to share a TLB included in a memory interface of the accelerator module.

The instruction processing method according to at least one embodiment of the present disclosure may further include sending, by each of the plurality of processor cores, a TLB entry operation instruction to the accelerator module such that the accelerator module executes the TLB entry operation instruction to perform one or more of the following operations: invalidating all of the TLB entries, invalidating a TLB entry having a specific process ID, invalidating a TLB entry having a specific process ID and a specific virtual page number (VPN), invalidating a TLB entry having a specific processor core ID, invalidating a TLB entry having a specific processor core ID and a specific process ID, and invalidating a TLB entry having a specific processor core ID, a specific process ID, and a specific VPN.

The instruction processing method according to at least one embodiment of the present disclosure may further include sending, by each of the plurality of processor cores, a cache operation instruction to an accelerator module, and executing, by the accelerator module, the cache operation instruction to perform one or more of the following operations: invalidating all cache lines in the data cache; invalidating one or more cache lines in the data cache; flushing all cache lines in the data cache; and flushing one or more cache lines in the data cache.

The instruction processing method according to at least one embodiment of the present disclosure may further include storing, by a control register of at least one accelerator engine, the TLB entry operation instruction and the cache operation instruction.

The instruction processing method according to at least one embodiment of the present disclosure may further include, in response to the at least one accelerator engine having a miss in the TLB, by the accelerator module, completing a page table access using a separate PTW included by the accelerator module.

The instruction processing method according to at least one embodiment of the present disclosure may further include, in response to the at least one accelerator engine having a miss in the TLB, by the accelerator module, accessing a PTW in a corresponding processor core based on a processor core ID included in the object instruction using the PTW router included in the accelerator module so as to complete the page table access.

The instruction processing method according to at least one embodiment of the present disclosure may further include, by a fetch front-end module included in each of the at least one accelerator engine, decoding the object instruction received from the arbiter; by one or more back-end execution modules included in the accelerator engine, executing the object instruction decoded by the fetch front-end module; by the memory interface arbiter module included in the accelerator engine, arbitrating a memory access request of the one or more back-end execution modules; and by a completion unit module included in the accelerator engine, submitting a processing result of the object instruction.

The instruction processing method according to at least one embodiment of the present disclosure may further include storing the object instruction parameters and operands by a load offloading buffer included in the fetch front-end module.

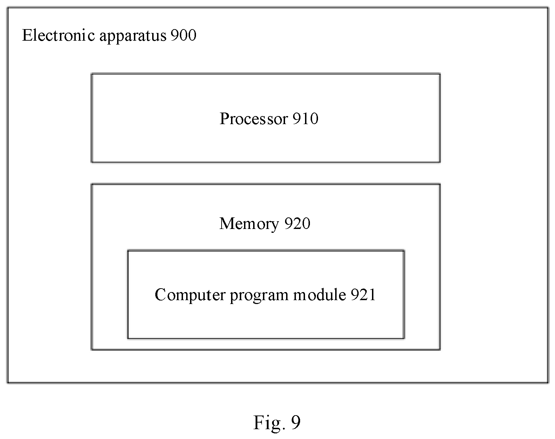

Fig. 9 is an electronic apparatus including a processor according to at least one embodiment of the present disclosure.

As shown in Fig. 9, the electronic apparatus 900 includes a processor 910 and a memory 920. The memory 920 includes one or more computer program modules 921. The one or more computer program modules 921 are stored in the memory 920 and may be configured to be read and executed by the processor 910.

The memory 920 and the processor 910 may be connected to each other by a bus system and/or other forms of connection mechanisms (not shown). For example, the bus may be a Peripheral Component Interconnect Standard (PCI) bus or an Extended Industry Standard Architecture (EISA) bus, etc. The communication bus may be categorized as an address bus, a data bus, a control bus, or the like.

The processor 910 may include the processor described above with reference to Figs. 1A-7. Exemplarily, the electronic apparatus may include a central processing unit (CPU), a digital signal processor (DSP), a graphics processing unit (GPU), or other forms of processing units having data processing capabilities and/or program execution capabilities, such as field programmable gate arrays (FPGAs). The processor 910 may be a general-purpose processor or a dedicated processor and may control other components of the electronic apparatus 900 to perform desired functions.

For example, the memory 920 may include any combination of one or more computer program products, and the computer program products may include various forms of computer-readable storage media, such as a volatile memory and/or a non-volatile memory. The volatile memory may include, for example, a random-access memory (RAM) and/or cache, and the like. The non-volatile memory may include, for example, a read-only memory (ROM), a hard disk, an erasable programmable read-only memory (EPROM), a portable compact disc read-only memory (CD-ROM), a USB memory, a flash memory, and the like. One or more computer program modules 921 may be stored on the computer-readable storage medium, and the processor 910 may run the one or more computer program modules 921 to implement various functions of the electronic apparatus 900. Various application programs and various data and various data used and/or generated by the application programs, etc., may also be stored in the computer-readable storage medium.

For example, the electronic apparatus 900 may further include, for example, an input apparatus such as a camera, a touch screen, a touch pad, a keyboard, a mouse, a camera, a microphone, an accelerometer, and a gyroscope; an output apparatus such as a liquid crystal display, a speaker, and a vibrator; a memory apparatus such as a magnetic tape, and a hard disk drive (HDD or SDD); and, for example, further include a communication apparatus such as a LAN card, a network interface card of a modem, and the like. The communication apparatus may allow the electronic apparatus 900 to communicate wirelessly or wired with other devices to exchange data, performing communication processing via a network such as the Internet. A driver is connected to an I/O interface as needed. Removable memory media, such as disks, CD-ROMs, magneto-optical disks, and semiconductor memories, are installed on the driver as needed to allow computer programs read therefrom to be installed into the memory apparatus as needed.

For example, the electronic apparatus 900 may further include peripheral interfaces (not shown in the figure) and the like. The peripheral interfaces may be various types of interfaces, such as a USB interface and a lightning interface. The communication apparatus may communicate with networks and other devices through wireless communication. The networks are, for example, the Internet, intranets, and/or wireless networks such as cellular telephone networks, Wireless Local Area Network (LAN) and/or Metropolitan Area Network (MAN). The wireless communication may use any of a variety of communication standards, protocols, and technologies, including, but not limited to, Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (e.g., based on IEEE 802. 11a, IEEE 802. 11b, IEEE 802.11g, and/or IEEE 802. 11n standards), Voice over Internet Protocol (VoIP) based on Internet protocol, Wi-MAX, protocols for e-mail, instant messaging, and/or short message service (SMS), or any other suitable communication protocols.

The electronic apparatus 900 may, for example, be a system-on-chip (SOC) or a device including such an SOC, for example, any device such as a cellular phone, a tablet computer, a laptop computer, an e-book, a gaming console, a television, a digital photo frame, a navigator, an electrical home appliance, a communication base station, an industrial controller, a server, or any combination of data processing apparatuses and hardware. The embodiment of the present disclosure does not impose any limitations thereto. Specific functions and technical effects of the electronic apparatus 900 may be described by reference to the above descriptions of the processor according to at least one embodiment of the present disclosure and additional aspects thereof, which will not be repeated herein.

The processor, according to the present disclosure, may implement the accelerator module without targeting specific accelerator functions. The accelerator module is featured by independent memory access capabilities and may automatically load data, process data, and write data back. Workloads that meet these characteristics may accelerate calculated loads of the processor cores by implementing the corresponding accelerator engines. The processor, according to the present disclosure, has the advantage that the flexibility in configuration of the accelerator engines within the core-cluster of processor cores and between the processor cores can be improved while the utilization efficiency of the accelerator engines of the processor can be increased.

The text and figures in the present disclosure are provided as examples only to assist in understanding the present disclosure. They should not be construed to limit the scope of the present disclosure in any way. Although some embodiments and examples have been provided, based on what is disclosed herein, it is clear to those skilled in the art that changes can be made to the shown embodiments and examples without departing from the scope of the present disclosure.

Although the present disclosure has been described in terms of exemplary embodiments, various changes and modifications may be suggested to those skilled in the art. The present disclosure is intended to cover such changes and modifications that fall within the scope of the appended claims.

Nothing described in the present disclosure should be construed to imply that any particular element, step, or function is a necessary element that must be included in the scope of the claims. The scope of the patent subject matter is limited only by the claims.

## Claims

1. A processor, comprising:
a plurality of processor cores, wherein each of the plurality of processor cores is configured to execute a first type of instructions; and
an accelerator module, wherein the accelerator module comprises at least one accelerator engine configured to execute a second type of instructions different from the first type of instructions;
wherein the accelerator module is coupled to and shared by the plurality of processor cores, the plurality of processor cores each dispatches an object instruction belonging to the second type of instructions in an instruction stream processed by itself to the accelerator module for execution and receives an execution result message of the object instruction from the accelerator module.

2. The processor of claim 1, wherein the accelerator module is dynamically coupled to the plurality of processor cores to receive, from the plurality of processor cores, same or different object instructions belonging to the second type of instructions.

3. The processor of claim 1 or 2, wherein each of the plurality of processor cores is further configured to:
recognize whether a current instruction in the instruction stream belongs to the first type of instructions or the second type of instructions,
dispatch the current instruction to a pipeline of the processor core in response to the current instruction belonging to the first type of instructions, and
dispatch the current instruction to the accelerator module as the object instruction in response to the current instruction belonging to the second type of instructions.

4. The processor of claim 1 or 2, wherein each of the plurality of processor cores is further configured to:
make the object instruction enter a dispatch queue to be dispatched,
for the object instruction, assign an entry in a reorder buffer, and
dispatch the object instruction to the accelerator module in response to the object instruction becoming an oldest instruction in the reorder buffer.

5. The processor of claim 1 or 2, wherein each of the plurality of processor cores is further configured to:
make the object instruction enter a dispatch queue to be dispatched,
wait for emptying of a reorder buffer, and
dispatch the object instruction to the accelerator module in response to the emptying of the reorder buffer.

6. The processor of any one of claims 1-5, wherein
the accelerator module is further configured to return a processing result of the object instruction to a corresponding processor core, and the execution result message of the object instruction comprises an execution result of the object instruction; or
the accelerator module is further configured to store the processing result of the object instruction into a memory coupled to the plurality of processor cores, and the execution result message of the object instruction includes a storage address of the execution result of the object instruction in the memory.

7. The processor of any one of claims 1-6, wherein each of the plurality of processor cores comprises:
an instruction fetching module configured to fetch instructions;
a decoding module configured to decode a fetched instruction into one or more micro-operations; and
a dispatching module configured to dispatch the one or more micro-operations to a processor core pipeline or the accelerator module.

8. The processor of claim 7, wherein the one or more micro-operations comprise:
a read and fill micro-operation for reading an instruction parameter and filling an operand, and
a load offloading micro-operation for dispatching a workload to an accelerator engine that executes the one or more micro-operations.

9. The processor of any one of claims 1-8, wherein, in response to an accelerator engine and a corresponding processor core being in a synchronous operation mode, the accelerator module is configured to return an execution status to the corresponding processor core in response to an end of execution of the object instruction in the accelerator module.

10. The processor of claim 8, wherein the one or more micro-operations further comprise:
a read response micro-operation for making the at least one accelerator engine return an execution status to a corresponding processor core.

11. The processor of any one of claims 1-10, wherein the accelerator module further comprises:
an arbiter, coupled between the plurality of processor cores and the at least one accelerator engine, wherein the arbiter is configured to arbitrate object instructions received from the plurality of processor cores to assign the object instructions to a target accelerator engine of the at least one accelerator engine.

12. The processor of any one of claims 1-11, wherein the accelerator module further comprises:
a memory interface coupled to the at least one accelerator engine and comprising a translation lookaside buffer,
wherein the at least one accelerator engine shares the translation lookaside buffer.

13. The processor of claim 12, wherein the translation lookaside buffer comprises one or more translation lookaside buffer entries, and
each of the one or more translation lookaside buffer entries comprises a processor core identity identification, the processor core identity identification being used for identifying a processor core to which a current translation lookaside buffer entry belongs among the plurality of processor cores.

14. The processor of claim 13, wherein each of the one or more translation lookaside buffer entries further comprises:
a process identity identification for identifying a process to which the current translation lookaside buffer entry belongs.

15. The processor of claim **14,** wherein each of the plurality of processor cores is further configured to send a translation lookaside buffer entry operation instruction to the accelerator module, and the translation lookaside buffer entry operation instruction, when executed, causes the accelerator module to perform one or more of following operations:
invalidating all translation lookaside buffer entries;
invalidating a translation lookaside buffer entry having a specific process identity identification;
invalidating a translation lookaside buffer entry having a specific process identity identification and a specific virtual page number;
invaliding a translation lookaside buffer entry having a specific processor core identity identification;
invaliding a translation lookaside buffer entry having a specific processor core identity identification and a specific process identity identification; and
invaliding a translation lookaside buffer entry having a specific processor core identity identification, a specific process identity identification, and a specific virtual page number.

16. The processor of claim 15, wherein the accelerator module further comprises a data cache, and
each of the plurality of processor cores is further configured to send a cache operation instruction to the accelerator module, and the cache operation instruction, when executed, causes the accelerator module to perform one or more of following operations:
invalidating all cache lines in the data cache;
invalidating one or more cache lines in the data cache;
flushing all the cache lines in the data cache; and
flushing one or more cache lines in the data cache.

17. The processor of claim 16, wherein the at least one accelerator engine comprises a control register, and
the control register is configured to store the translation lookaside buffer entry operation instruction and the cache operation instruction.

18. The processor of any one of claims 1-17, wherein the accelerator module further comprises a page table walker that is independent of the plurality of processor cores,
wherein the accelerator module is further configured to: in response to a miss in the translation lookaside buffer occurring for the at least one accelerator engine, complete a page table access using the independent page table walker.

19. The processor of any one of claims 1-17, wherein the accelerator module further comprises a page table walker router connected to at least some of the plurality of processor cores, and the object instruction further includes a processor core identity identification,
wherein the accelerator module is further configured to: in response to a miss in the translation lookaside buffer occurring for the at least one accelerator engine, access a page table walker in a corresponding processor core based on the processor core identity identification using the page table walker router, to complete a page table access.

20. The processor of claim 11, wherein each of the at least one accelerator engine comprises:
a fetch front-end module configured to decode the object instruction received from the arbiter;
one or more back-end execution modules configured to execute the object instruction decoded by the fetch front-end module;
a memory interface arbiter module configured to arbitrate a memory access request from the one or more back-end execution modules; and
a complete module configured to submit a processing result of the object instruction.

21. The processor of claim 20, wherein the fetch front-end module comprises a load offloading buffer, and the load offloading buffer is configured to store object instruction parameters and operands.

22. An electronic apparatus, comprising the processor of any one of claims 1-21.

23. An instruction processing method, comprising:
receiving, by a plurality of processor cores, an instruction stream to be executed, wherein the instruction stream comprises a first type of instructions and a second type of instructions different from the first type of instructions;
processing, by the plurality of processor cores, the first type of instructions in a corresponding instruction stream, respectively; and
dispatching, by each of the plurality of processor cores, an object instruction belonging to the second type of instructions in an instruction stream processed by the processor core to an accelerator module for execution, and receiving an execution result message of the object instruction from the accelerator module,
wherein the accelerator module comprises at least one accelerator engine configured to execute the second type of instructions, and the accelerator module is coupled to and shared by the plurality of processor cores.
